# NEW EUROPEAN PATENT SPECIFICATION

(11) **EP 2 447 212 B2**
(45) Date of publication and mention of the opposition decision: **07.07.2021**
(45) Mention of the grant of the patent: 04.03.2015
(21) Application number: 09176931.5
(22) Date of filing: 24.11.2009
(51) Int. Cl.: C01F 7/54, B23K 35/36, B23K 35/362

(54) **A method for production of cesium aluminum fluoride**
Verfahren zur Herstellung von Cäsiumaluminiumfluorid
Procédé de production de fluorure de césium et d'aluminium

(43) Date of publication of application: 02.05.2012
(73) Proprietor: Sentes-Bir Anonim Sirketi, Izmir (TR)
(72) Inventor: Tuncelli, Mulayim, Izmir (TR)

(56) References cited:
- EP-A1- 0 837 035
- WO-A1-2007/074117
- WO-A1-2007/131993
- US-A- 4 689 092
- US-A- 4 689 092
- US-A- 5 171 377
- US-A- 6 010 578
- J. Karlstrom: "Reactor Model for Production of Aluminum Fluoride", Thesis Lund University, 2002,
- Kotz J. et al: "Chemistry and Chemical Reactivity, Enhanced Review Edition", Cengage Learning, 2006,
- Conley et al: "Fluorine Compounds, Inorganic, Aluminium", Kirk Othmer Encyclopedia of Chemical Technology, 2002,
- C.E.Mortimer et al: "Das Basiswissen der Chemie", 2007, Thieme Georg Verlag pages 490-491,
- pH Theory Guide by Mettler Toledo AG issued in October 2007

## Description

### Field of the Invention

The present invention relates to a method for production of crystalline cesium aluminum fluoride used as a flux in brazing of aluminum to aluminum and copper.

### Prior Art

The aqueous mixture of cesium aluminum fluoride changes phase by hardening rapidly, as a result of which problems are encountered during application. Application of flux used in brazing of aluminum and copper to the brazing region with help of a brush becomes difficult, and consumption of said flux increases. Although water is added in order to prevent hardening, fluidity is lost again, and hardening occurs after a while, which decreases the performance of the product, thus work flow in the process slows down.

In US 4689092, in the state of the art, production of a flux comprising cesium fluoroaluminate and a mixture thereof with aluminum fluoride, and having an aluminum fluoride/cesium fluoride molar ratio of 67/33 to 26/74 is disclosed.

In EP0785045, in the state of the art, production of flux having low melting point is disclosed. Said flux includes the cesium fluoroaluminate reaction product of from about 30 to about 75 mole percent of cesium fluoride and from about 70 to about 25 mole percent of aluminum fluoride, wherein the flux has a melting point below about 440 °C; and, up to about 3% by weight of unreacted cesium fluoride.

In WO2007074117, in the state of the art, a method of producing an amorphous cesium aluminum fluoride complex and the use of the complex as a flux in brazing of aluminum is disclosed.

In US5171377, in the state of the art, a brazing flux comprising cesium fluoride, aluminum fluoride, and crystalline aluminum hydroxide or aluminum oxide or both which form a crystalline compound is disclosed. The crystalline compound has a melting point of 440-580°C. The brazing flux is non-corrosive and safe to use. The product is well suited for a brazing aluminum material with a high magnesium content and also for torch brazing.

In JP2284766, in the state of the art, production of a brazing member having excellent performance used for brazing aluminum or aluminum alloy in a nonoxidative atmosphere in which the vapor of cesium fluoroaluminate complex exists is disclosed. During this process, the prescribed temperature is maintained. The vapor of the aluminum complex sticks extremely little and uniformly to the above mentioned aluminum or aluminum alloy and breaks the aluminum oxide film of the surface thereof, whereby accelerating the process of covering with solder. As a result, the solder flows uniformly and forms uniform fillets at the joining points. Further, the above- mentioned vapor has the effect of preventing the oxidation of material surfaces by bonding to the moisture and oxygen in the atmosphere thereby forming the more nonoxidative atmosphere. The vapor of the compound expressed by general formula CsₙAlₙ⁺³ (such as CSAlF₄ and Cs₂AlF₂) and used as the aluminum complex.

### Summary of the Invention

The objective of the present invention is to realize a method for production of a cesium aluminum fluoride in which aqueous form of cesium aluminum fluoride remains constant by changing the physical characteristics of cesium aluminum fluoride.

Another objective of the present invention is to realize a method for production of a cesium aluminum fluoride in which the mixture used in brazing is enabled to remain non-hardened during the process.

A further objective of the present invention is to realize a method for production of a cesium aluminum fluoride in which form of the mixture is enabled to be fluid constantly and be applied by means of a brush swiftly.

### Detailed Description of the Invention

A method for production of a cesium aluminum fluoride is illustrated in the accompanying figurewherein,

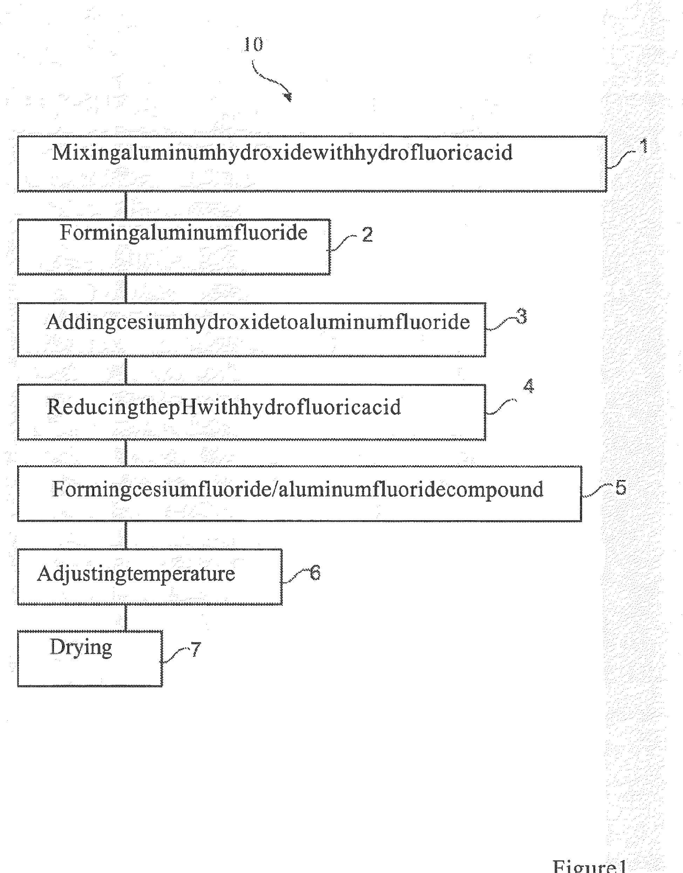

Figure 1 is a flow chart of the method for production of a cesium aluminum fluoride.

The components in the figures are numbered individually, where the numbers refer to the following:
10- A method for production of a cesium aluminum fluoride
1- Mixing aluminum hydroxide with hydrofluoric acid
2- Forming aluminum fluoride
3- Adding cesium hydroxide to aluminum fluoride till adjusting the pH to 7.8-8
4- Reducing the pH to 6.5-7 with hydrofluoric acid
5- Forming cesium fluoride/aluminum fluoride compound
6- Adjusting temperature
7- Drying

The reaction according to the invention is carried out by mixing aluminum hydroxide with hydrofluoric acid (1). At the end of the reaction, aluminum fluoride is formed (2). Cesium hydroxide is added into aluminum fluoride (3) till the pH is adjusted to 7.8-8, and as a result of the reaction, formation of cesium fluoride/aluminum fluoride compounds is provided (5). When pH reaches to the range of 7.8-8, pH is reduced to 6.5-7 by adding hydrofluoric acid (4). During production, temperature of reactor is kept at 90-95°C (6). After pH adjustment is completed, the product is placed into the drying oven, and dried at a temperature between 90-105°C (7).

## Claims

1. A method for production of a cesium aluminum fluoride (10) **characterized by** the following steps:
- mixing aluminum hydroxide with hydrofluoric acid (1),
- forming aluminum fluoride (2),
- adding cesium hydroxide to aluminum fluoride till adjusting the pH to 7,8-8(3),
- reducing the pH with hydrofluoric acid till the pH of the solution is adjusted to 6,5-7 (4),
- forming cesium fluoride/aluminum fluoride compound (5),
- maintaining the temperature of the reactor at 90-95°C during production (6),
- drying the product in a drying oven at a temperature between 90-105°C (7).

## Patentansprüche

1. Ein Verfahren zur Herstellung von Cäsiumalumini-umfluorid (10), **gekennzeichnet durch** die folgen-den Schritte:
- Mischen von Aluminiumhydroxid mit Fluorwas-serstoffsäure (1),
- Bildung von Aluminiumfluorid (2),
- Hinzufügen von Cäsiumhydroxid zum Alumi-niumfluorid, bis der pH-Wert auf 7,8-8 eingestelltist (3),
- Reduzieren des pH-Werts mit Fluorwasser-stoffsäure, bis der pH-Wert der Lösung auf 6,5-7 eingestellt ist (4),
- Bildung von Cäsiumfluorid/Aluminiumfluorid-Verbindung (5),
- Aufrechterhalten der Temperatur des Reaktorswährend der Herstellung bei 90-95 °C (6),
- Trocknen des Produkts in einem Trockenofen bei einer Temperatur zwischen 90 und 105 ° C (7)

## Revendications

1. Une méthode pour la production d'un fluorure d'alu-minium de césium (10) **caractérisée par** les phases suivantes :
- Mélanger l'hydroxyde d'aluminium avec l'acidefluorhydrique (1)
- Former le fluorure d'aluminium (2)
- Ajouter l'hydroxyde de césium au fluorured' aluminium jusqu'à l'ajustement du pH au 7,8-8 (3),
- Réduire le pH avec l'acide fluorhydrique jus-qu'au pH de la solution est ajusté au 6,5 - 7 (4),
- Former le composé de fluorure de césium/fluo-rure d'aluminium (5),
- Maintenir la température du réacteur au 90 -94 °C pendant la production (6)
- Séchage du produit dans une étuve à une température comprise entre 90 et 105 ° C (7)
